# EUROPEAN PATENT SPECIFICATION

(11) **EP 2 495 435 B1**
(45) Date of publication and mention of the grant of the patent: **14.10.2015**
(21) Application number: 11001661.5
(22) Date of filing: 01.03.2011
(51) Int. Cl.: F03D 7/02

(54) **Pitch drive system and method for controlling a pitch of a rotor blade of a wind energy plant**
Blattwinkel-Verstellsystem und Verfahren zur Verstellung des Blattwinkels einer Windkraftanlage
Système de commande de pas et procédé de contrôle d'un pas de pale de rotor d'une installation d'éolienne

(43) Date of publication of application: 05.09.2012
(73) Proprietor: Areva Wind GmbH, 27572 Bremerhaven (DE); Moog Unna GmbH, 59423 Unna (DE)
(72) Inventor: Hagedorn, Ralf, Dipl.-Ing., 49451 Holdorf (DE); Rösmann, Tobias, Dipl.-Ing., 44263 Dortmund (DE); Zickert, Bernd, Dipl.-Ing., 28876 Oyten (DE)
(74) Representative: Prinz & Partner mbB

(56) References cited:
- EP-A1- 1 286 048
- EP-A2- 2 101 058
- DE-A1- 10 127 102
- DE-A1-102004 046 260

## Description

### FIELD OF THE INVENTION

The invention relates to a method for controlling a pitch of a rotor blade of a wind energy plant. The invention further relates to a pitch drive system of a wind energy plant and a wind energy plant with a pitch drive system.

### BACKGROUND

Modern wind energy plants provide control of power and rotor speed by changing the aerodynamic force that is applied to the rotor. Usually, this is performed by changing the pitch of the rotor blades. The operation of a wind energy plant or a wind turbine may be divided into two regimes. In a first regime at lower wind speeds no pitch activity during operation of the power plant is necessary. The rotor blade is fixed or hold in an optimal aerodynamic position. In a second regime at higher wind speeds of typically more than 12 m/s or in turbulent wind situations, pitch activity, i.e. a frequent adjustment of the pitch angel of the rotor blades, is necessary during operation of the wind turbine. A transition between the two regimes will occur e.g. for freshening winds.

Another example for pitch activity is an emergency shutdown of the wind turbine. In such a case, the rotor has to be stopped as fast as possible and accordingly, the rotor blades are moved to a pitch angle of 90° so as to generate a maximum wind resistance and to slow down the rotor. This 90° pitch angle is also referred to as a "feathering position" or "feather-position".

Usually, individual pitch adjustment for each rotor blade is provided wherein in most cases an electric motor that is located in the rotor hub is used for powering the pitch drive. When operating the wind energy plant in a pitch activity mode, typically, a high number of small adjustments, i.e. a movement by a small pitch angle and a plurality of movements in different directions, i.e. adjustment of positive and negative pitch angle changes are necessary. The pitch drive very frequently adjusts the pitch of the rotor blade with a moderate torque and motor speed. In modern wind energy plants, exemplarily disclosed in DE 197 39 164 A1, a cyclic adjustment of the pitch of the rotor blades is performed in order to reduce the yaw and tilt moments that are applied to the rotor and the supporting structure. However, in case of an emergency shutdown, a high torque of the pitch drive is necessary in order to provide a fast pitch movement having a huge total pitch angle change because an emergency shutdown has to be realized within a very short time.

Typically, the pitch drive comprises an electric motor that is mounted to a suitable gear e.g. an epicyclic gear having a high gear ratio. A drive bevel that is mounted to the driven (output) shaft of the epicyclic gear typically engages an annular gear or tooth ring that is fixed to the rotor blade. For fixing the rotor blade at a desired pitch angle, the pitch drive often comprises a brake that is preferably mounted at the drive (high speed) shaft of the epicyclic gear. This is because the torque values at the drive shaft are significantly lower than the torque values at the drive bevel or the driven shaft itself and accordingly a smaller brake is sufficient. However, every mechanic drive train has a backlash. This applies to the gear as well as to the mechanic power transmission between the drive bevel and the annular gear. When changing the pitch of the rotor blade especially when altering the direction of pitch movement, the backlash in the mechanic drive train leads to peaks in torque. Even during operation of the wind energy plant in the first regime where the rotor blades have a fixed pitch angle and the brake is locked, the backlash will cause peaks in the mechanic load of the mechanic drive train, i.e. torque peaks. This requires an oversized pitch drive system and mechanic drive train or a significantly lower lifetime has to be accepted. Due to the backlash, small pitch angle changes have an unfavorable effect on the lifetime of the blade bearing.

DE 10 2004 046260 A1 discloses a pitch drive system and a method of controlling the pitch of a rotor blade of a wind energy plant. The wind energy plant comprises a rotor having a rotor hub, wherein at least one rotor blade is mounted on the rotor hub. The rotor blade is rotatable around a pitch axis using a pitch drive system. The pitch drive system comprises a first and a second antagonistic pitch drive, wherein this first and second pitch drive are controlled so as to apply a first and a second counteractive torque on the rotor blade.

### SUMMARY

It is an object of the invention to provide a method for controlling a pitch of a rotor blade of a wind energy plant, a pitch drive system and a wind energy plant having an improved pitch drive system.

In one aspect of the invention, a method for controlling a pitch of a rotor blade of a wind energy plant is provided. The wind energy plant comprises a rotor having a rotor hub wherein at least one rotor blade is mounted to the rotor hub. Further, the rotor blade is rotatable around a pitch axis by a pitch drive system having a first pitch drive and a second pitch drive. Preferably, the first pitch drive and the second pitch drive are an electric motor that is mounted on an epicyclic gear. Further, a drive shaft of the gear is preferably the driven shaft of the respective electric motor. A drive bevel engages an annular gear that is fixed to the rotor blade, wherein the drive bevel is mounted to the driven shaft of the epicyclic gear. Accordingly, the pitch drives are preferably fixed to the rotor hub while the angular gear is fixed to the rotor blade and is therefore rotatable around the pitch axis together with the rotor blade.

In an aspect of the invention, the first pitch drive and the second pitch drive are controlled so as to apply a first and a second counteractive torque to the rotor blade. In other words, the first pitch drive is controlled to apply a first torque to the rotor blade and the second pitch drive is controlled to apply a second torque to the rotor blade. The control mechanism of the first and second pitch drive is then configured such that the first torque and the second torque are counteractive.

In an aspect of the invention, a first torque and a second torque being counteractive with respect to the first torque may be applied to the rotor blade so as to hold the rotor blade at a predetermined pitch position.

Advantageously, the method according to the aspects of the invention allows eliminating backlash in the drive train and therefore, the accuracy for setting the pitch angle is improved. Further, the occurrence of backlash movements and related torque peaks in the pitch system is reduced.

Torque peaks typically occurring in the pitch drive system, e.g. in the epicyclic gear and between the drive bevel and the annular gear are omitted. This is because both pitch drives apply a torque having a constant direction that is independent from the direction of rotation, i.e. independent from the prefix of the pitch angel of the rotor blade. The drive chain of each pitch drive keeps a pretension and accordingly no torque peaks occur in the drive chain. This specific antagonistic control of the pitch drives provides a very conservative, backlash free, way of operating the drive chain of the pitch drive system.

In an embodiment of the invention, a torque applied by the first pitch drive can be increased for overcoming a torque applied by the second pitch drive and a pitch of the rotor blade may be varied. In other words, the torque applied by the first pitch drive can be made greater than the torque applied by the second pitch drive for varying the pitch of the rotor blade. If a torque that is applied by the first pitch drive is increased so as to overcome the torque applied by the second pitch drive, a resulting torque vector that is the vector sum of the first and the second torque can cause the rotor blade to vary its pitch angle in a backlash free way.

According to aspects of the invention, the torque that is effecting a change in the pitch angle of the rotor blade is the vector sum of the torque applied by the first pitch drive and the torque applied by the second pitch drive.

According to an embodiment, a torque applied by the second pitch drive is maintained, lowered or cancelled while a torque that is applied by the first pitch drive is increased so as to overcome a torque applied by the second pitch drive and to vary a pitch of the rotor blade. If the torque that is applied by the second pitch drive is lowered or cancelled, it may be sufficient to maintain the torque that is applied by the first pitch drive. The first pitch drive has to overcome the pretension torque that is applied by the second pitch drive in order to move the rotor blade. In other words, the first pitch drive works as a motor while the second pitch drive works as a generator. If the prefix of the pitch movement should be inverted, the first pitch drive lowers its torque until the vector sum of the torque of the first pitch drive and the torque that is applied by the second pitch drive is equal to zero. Accordingly, the pitch movement of the rotor blade stops. If subsequently the torque applied by the second pitch drive is increased while the applied torque of the first pitch drive remains constant, a reverse pitch movement of the rotor blade results. Now, the second pitch drive works as a motor while the first pitch drive works as a generator. According to the method outlined above, a pitch angle of a rotor blade may be varied without changing the prefix of the torque in each drive chain of a respective pitch drive. It is the resulting vector sum of the torque that is applied by the first pitch drive and the torque that is applied by the second pitch drive that causes the rotor blade to rotate without backlash.

By combining the two previous method steps, the resulting torque vector may be increased if the torque applied by the first pitch drive is increased while the torque applied by the second pitch drive is decreased for changing a direction of pitch movement. Vice-versa the applied torque vector (that is directed in an opposite direction) may be increased if the torque applied by the second pitch drive is increased while the torque applied by the first pitch drive is decreased. In another aspect, the torque that is applied by the second pitch drive may be lowered during build-up of the torque applied by the first pitch drive or remains unchanged. The same applies vice versa to a pitch movement in the opposite direction.

In another aspect of the invention, a first torque that is applied by the first pitch drive comprises a counter-torque component for compensating external forces acting on the rotor blade and a counteractive component. The counteractive component of the first torque has the same nominal value as the torque that is applied by the second pitch drive.

Advantageously, external forces acting on the rotor blade, such as aerodynamic forces or gravitational forces, may be compensated. The first torque comprises a counter torque component for compensating this forces (at least substantially). A second component may apply a counteractive torque acting antagonistic to the torque that is applied by the second pitch drive. The antagonistic torques have the same nominal value.

In normal wind turbine operation, at least in average, a pitch operation pitching the blade towards a working position (i.e. the direction of pitch movement is directed to a stall position) requires a higher torque provided by the pitch drive system than a pitch movement towards the stop position (i.e. the direction of pitch movement is directed to a feathering- or 90°-position). In other words, if the wind blows in a direction perpendicular to the main plane of the rotor, towards the rotor hub, pitching against the wind direction will require more torque from the pitch drive system than pitching in the opposite direction.

According to an advantageous embodiment, the pitch drive system may further comprise a third pitch drive. The first pitch drive and the third pitch drive may then be jointly controlled so as to provide a resulting torque comprising a counter-torque component compensating external forces acting on the rotor blade and a counteractive component. The counteractive component of the resulting torque has the same nominal value as a torque that is applied by the second pitch drive.

In practice, a higher number of pitch drives is advantageous for a pitch movement that is directed to the stall-position than for pitch movement to the feather-position. Advantageously, the same type of pitch drive motors can be used, which allows to make use of volume effects and to keep down the effort for logistics. According to this aspect of the invention, more torque is available for pitching towards the wind.

In another aspect of the invention, a prefix of the torque applied by the first pitch drive may be changed and a prefix of the torque applied by the second pitch drive may also be changed. The second torque that is applied by the second pitch drive comprises a counter-torque component for compensating external forces acting on the rotor blade and a counteractive component. The counteractive component of the second torque has the same nominal value as the torque that is applied by the first pitch drive.

Advantageously, the side of the used drive bevel teeth and of the annular gear teeth is changed. This prefix operation can be done on a periodic or event basis. Moreover, the prefix change allows to share the existing load equally between both pitch drives and to equalize the thermal load and to share it between the two pitch drives. As the distribution of the required drive torque is not the same for both pitching directions this mode of operation is advantageous. The mechanic load is distributed to both, i.e. to the first pitch drive and to the second pitch drive. This allows the thermal load on each pitch drive to be reduced and provides short breaks or shut-down times to the electric pitch motors. This finally reduces the requirements and dimension of the pitch motor. Advantageously, a special transition control algorithm is implemented to switch over calmly between this first and second state.

In a first state, the first pitch drive applies a torque that points (torque considered as a vector) into a first direction and the second pitch drive applies a torque that points into a second direction and the first and second directions are opposite to each other. For example, the first torque may be applied for causing a clockwise rotation while the second torque may be applied for causing a counterclockwise rotation. In this situation, the first pitch drive is located at a later clock position compared with the position of the second pitch drive.

In a second state, the first pitch drive applies a torque that points into the second direction and the second pitch drive applies a torque that points into the first direction and the first direction and the second direction are opposite to each other. The first pitch drive is still located at a later clock position compared with the position of the second pitch drive. In other words, the first torque may produce a rotation towards the position of the second pitch drive and the second torque may produce a rotation towards the position of the first pitch drive. For example, the first torque may be applied for causing a counterclockwise rotation while the second torque may be applied for causing a clockwise rotation.

The period of time between the state transitions, i.e. the period of time the systems remains in the first and second state, respectively, may be a fixed period of time, e.g. depending on the motor thermal constant. However, it may be controlled too. In this case, a state change is provided if a measured or estimated drive temperature or another parameter exceeds a critical value. This control duty cycle not only saves thermal resources on the motor side but also on the side of the electrical power device (e.g. inverter side). Therefore, the thermal sizing of each electrical power device (e.g. inverter) can be reduced, too.

In another aspect of the invention, the prefix of the torque applied by the second pitch drive is changed and a torque is applied to the rotor blade by the first pitch drive so as to vary the pitch angle of the rotor blade towards its feathering position.

Advantageously, the feathering position can be reached faster, e.g. in case of an emergency shutdown. The emergency operation to the feathering position represents an extreme operation condition for the pitch drive system. Usually, during this operation, in a conventional pitch system, the pitch motor has to provide several times its nominal torque. Therefore, the motor has to be dimensioned accordingly. Advantageously and according to an aspect of the invention, the use of two pitch drives for a rotation of the rotor blade in the same rotating direction allows summing the peak torques of the two pitch drives during emergency feathering, which has a positive impact on the pitch motor dimensioning.

According to an advantageous embodiment, a failure in the first and second pitch drive is detected, respectively. A torque is applied to the rotor blade so as to vary the pitch angle of the rotor blade towards its feathering position by the second and first pitch drive, respectively.

Advantageously, the feathering position can be reached in case of failure of one of the pitch drives. In order to achieve this, each pitch drive is dimensioned so as to achieve a temporary peak torque that is sufficient to drive the rotor blade into the feathering position in a suitable time.

According to an advantageous aspect of the invention, each of the pitch drives further comprises a brake. At least one of the brakes of the first pitch drive and second pitch drive is fixed in a predetermined pitch position, and the torque applied by the respective pitch drive is cancelled.

Advantageously, according to this aspect of the invention, one pitch drive is holding its shaft position mechanically via a holding brake, while the other pitch drive is controlled to generate a counteractive torque in order to eliminate the backslash. In other words, once the predetermined pitch position is reached, one of the pitch drive generated torques is replaced by a braking torque. Advantageously, this requires less energy than generating a counteractive torque by the pitch drive.

Furthermore, both brakes can be activated once a pretension eliminating the backlash is reached and a fixed pitch angle is desired. In other words, the first and second pitch drive are controlled so as to set a desired pitch angel of the rotor blade. Mechanic pretension is maintained in the mechanic drive chain if the end position is reached and subsequently, the brakes at both pitch drives are locked. If the wind energy plant operates in a wind speed regime where no pitch activity is necessary, the rotor blades may be fixed at a predetermined/optimal pitch angle. However, during rotation of the rotor there are varying loads on the rotor blades. This may result in a torque in the power chain of the pitch drive having an alternating prefix. Since a brake of the pitch drive system is typically fixed on the drive shaft (fast shaft) of an epicyclic gear, the varying torque is present in the whole drive chain and torque peaks may occur therein. Advantageously, the method according to this aspect of the invention provides a fixation of the rotor blade by help of two pitch drives having a pretension torque within their whole power chain that is counteractive. Advantageously, the pretension torque can be kept by means of the brakes mounted to the pitch drive shafts of the two counteracting pitch drives even if the pitch drives themselves (the pitch motors) are deactivated, thus achieving a backlash free fixed positioning of the rotor blades. Accordingly, torque peaks which are due to the backlash in the power chain are removed in an activated state and in a deactivated state of the pitch drives.

In an aspect of the invention, each of the pitch drives further comprises a driven output shaft with a bevel mounted thereon, the bevel being adapted to engage an annular gear or tooth ring that is fixed to the rotor blade. The first pitch drive and second pitch drive are controlled such that the first torque and the second counteractively controlled torque are the torques seen by the corresponding driven output shaft.

The torque of the driven output shaft of a pitch drive is different from the electric motor driving torque. This is due to the torque amount required for acceleration or deceleration of the epicyclic gear inertia. For this reason, it is advantageous to control the driven or output shaft torque of the pitch drives. For certain pitch acceleration or deceleration situations of the rotor blade, the driving torque may change sign while the shaft torque is controlled with constant sign for keeping the gearbox pretension as described above.

According to a further aspect of the invention, the required driving torque for the pitch drive is calculated including the required shaft torque and an additional component related to the measured or estimated pitch acceleration of the rotor blade.

In another aspect of the invention, a pitch drive system for a wind energy plant having a supporting structure carrying a rotor having a rotor hub is provided. At least one rotor blade is mounted to the rotor hub and is further rotatable around a pitch axis by a first and a second antagonistic pitch drive. The pitch drive system further comprises a control unit that is configured to control the first pitch drive and the second pitch drive for applying a first and a second counteractive torque to the rotor blade.

Same or similar advantages that have already been mentioned with respect to the method according to aspects of the invention also apply to the pitch drive system according to aspects of the invention.

In an advantageous embodiment of the invention, each of the pitch drives of the pitch drive system further comprises a driven output shaft with a bevel mounted thereon. The bevel is adapted to engage an annular gear or tooth ring that is fixed to the rotor blade. The first and second pitch drive is configured to apply a first and second counteractive torque to the corresponding driven output shaft.

According to an embodiment of the invention, a maximum torque of the first pitch drive is greater than a maximal torque of the second pitch drive. In other words, the first pitch drive (e.g. the first pitch drive motor) is configured to provide a first maximum torque while the second pitch drive (e.g. the second pitch drive motor) is configured to provide a second maximum torque. The first torque should be greater than the second torque. The necessary torque for a pitch movement from the feathering position to the stall position is typically higher than the necessary torque for a movement in the opposite direction, i.e. a pitch movement from the stall position to the feathering position. Advantageously, the pitch drive that is used for the pitch movement demanding the higher torque is a greater pitch drive that is configured to provide a higher maximum torque.

In another aspect of the invention, each pitch drive further comprises an electrical power device. The electrical power device is used for driving the pitch drive. The electrical power devices are electrically coupled to each other and each one of the electrical power devices is adapted to receive and transmit electrical power respectively from and to the other electrical power device. The electrical power device can feed electrical power (energy) to the pitch drive but may also receive electrical power or energy from the pitch drive if the pitch drive generates energy.

The electrical power device may be an inverter. An inverter can be an electrical device that converts direct current (DC) to alternating current (AC). The converted AC can be at any required voltage and frequency with the use of appropriate transformers, switching, and control circuits. The inverter may then feed electrical power or energy to the pitch drive but may also receive electrical power or energy from the pitch drive if the pitch drive generates energy.

According to an aspect of the present invention, when controlling a pitch angle of a rotor blade, one pitch drive may work as a motor while the second pitch drive can work as a generator. Advantageously, the electrical link allows the energy produced by the generating pitch drive to be recycled into (at least partially be used in) the driven pitch drive. Global efficiency of the pitch system according to this aspect of the invention is enhanced.

According to another aspect of the invention, the implementation of the aforementioned antagonistic control algorithm requires synchronization between the first and second pitch drive. Advantageously, this may be achieved by establishing a direct communication link is established between the two pitch drives.

Usually, the torque of the pitch drives is controlled by the amount of current flowing through the pitch motors. This current control is generally done by a high frequency controller. Advantageously, a direct communication link allows to have a direct interaction between the pitch drives during operation of the wind energy plant. In a further aspect of the invention, each pitch drive comprises a high frequency current controller for controlling the torque. The controllers are directly connected to each other by a high frequency broad bandwidth link, which minimizes high frequency torque/current ripples and optimizes the pitch drives synchronization. According to a further aspect of the invention, one of the controllers is the master- the other is the slave-controller.

The invention further provides a wind energy plant with a pitch drive system according to the aspects of the invention. The wind energy plant with the pitch drive system is configured to perform according to the aspects of the invention.

Same or similar advantages already mentioned for the method according to the invention apply to the wind energy plant according to the invention.

### BRIEF DESCRIPTION OF THE DRAWINGS

Further aspects of the invention will ensue from the following description of an example embodiment of the invention with reference to the accompanying drawings, wherein
FIG. 1 is a simplified wind energy plant according to an embodiment of the invention,
FIG. 2 is a simplified detailed view of this wind energy plant,
FIGS. 3 to 6 are further simplified detailed views of the pitch drive system of the wind energy plant, according to embodiments of the invention,
FIG. 7 is a schematic diagram illustrating the control of the pitch drives and
FIG. 8 is a schematic diagram illustrating the control of the pitch drive for a wind energy plant having three blades according to further embodiments of the invention.

### DETAILED DESCRIPTION OF AN EXAMPLE EMBODIMENT

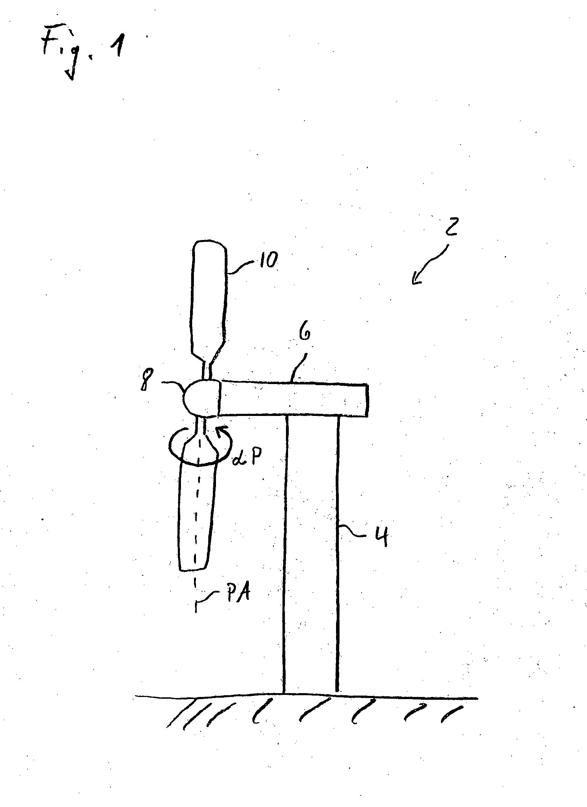

FIG. 1 is a simplified view of a wind energy plant 2 having a supporting structure 4 carrying a generator 6 having a rotor with a rotor hub 8 carrying rotor blades 10 that are rotatable around a pitch axis PA by a pitch angle αP.

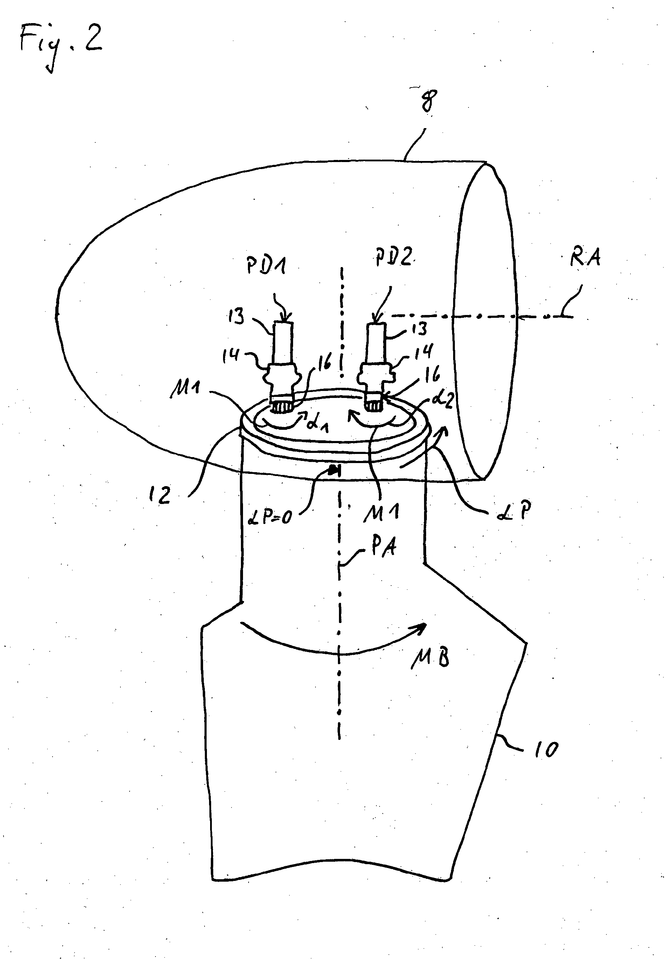

FIG. 2 is a more detailed simplified view of the rotor hub 8 rotating around a rotor axis RA during operation of the wind energy plant 2. The rotor hub 8 carries a rotor blade 10 that is rotatable around a pitch axis PA by a pitch angle αP. An annular gear 12 is fixed to the rotor blade 10. A first and a second pitch drive PD1 and PD2 are fixed to the rotor hub 8. Each pitch drive PD1, PD2 comprises an electric motor 13 having a driven shaft that is mounted to a drive shaft (fast shaft) of an epicyclic gear 14. The driven shaft of the epicyclic gear 14 is mounted to a drive bevel 16 engaging the annular gear 12. The first pitch drive PD1 applies a first torque to the annular gear 12 by rotating the drive bevel 16 by an angle α1. The second pitch drive PD2 applies a second torque to the annular gear 12 by rotating the drive bevel 16 by an angle α2.

In order to simplify the understanding, in the context of this specification, torques are indicated by a direction of rotation rather than by the corresponding torque vectors. In this regard, the direction of rotation corresponds to a free movement of the respective pitch drives in response the corresponding torque. The corresponding torque vectors can be derived from the direction of rotation by help of the known right hand rule. Accordingly, the torque that is applied by the first pitch drive PD1 is indicated by M1 that is directed in the same direction as the angle of rotation α1 of the drive bevel 16. Similar, the torque that is applied by the second pitch drive PD2 is indicated by M2 that is directed in the same direction as the angle of rotation α2 of the drive bevel 16 that is coupled to the second pitch drive PD2.

The blade torque (indicated by direction of rotation MB) is due to aerodynamic and gravitational forces on the rotor blade 10 and is generated during operation of the wind energy plant 2. During operation of the wind energy plant 2 in a wind regime where no pitch activity is necessary, the rotor blades 10 need to be set to an optimal pitch angle. This is typically referred to as αP = 0. The rotor blade 10 has to be fixed or held in this optimal position while the blade torque needs to be absorbed by the pitch drive system.

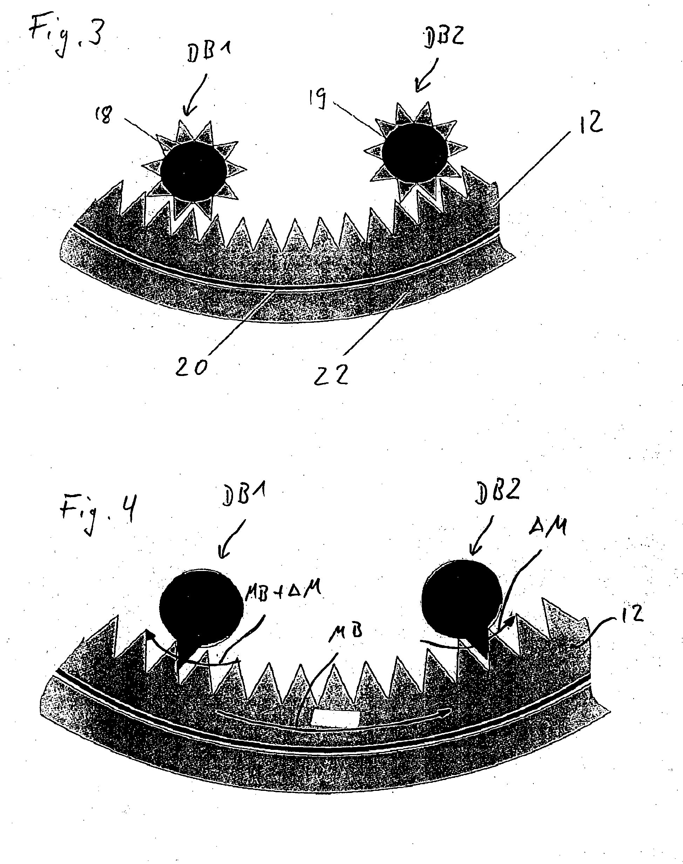

FIG. 3 is a simplified detailed view of the pitch drive system of FIG. 2. A first drive bevel DB1 and a second drive bevel DB2 engage the annular ring 12. The bevels DB1, DB2 are mounted on a respective driven shaft 18, 19 of the epicyclic gear 14 of the first and second pitch drive PD1, PD2, respectively. The annular gear 12 is fixed to the rotor blade 10 and is carried by a pitch bearing 20 that is located between a non-rotating part 22 fixed to the rotor hub 8 and the annular ring 12 that is fixed to the rotor blade.

FIG. 4 shows a further simplified view to the pitch drive system. The first drive bevel DB1 applies an output shaft torque that is indicated by a direction of rotation MB + ΔM. MB represents the blade torque that has to be compensated and is due to gravitational and aerodynamic forces on the rotor blade, also referred to as a counter torque component. ΔM indicates a torque defining a pretension between the first drive bevel DB1 and the second drive bevel DB2, also referred to as a counteractive torque component. The second drive bevel DB2 applies an output shaft torque to compensate this pretension. In other words, the second pitch drive PD2 applies a torque to the rotor blade 10, the applied torque having the same nominal value as the counteractive torque component ΔM. The first pitch drive PD1, i.e. the first drive bevel DB1, applies a torque to the annular gear 12 that is counteractive to the torque that is applied to the annular gear 12 by the second pitch drive PD2. The first drive bevel DB1 applies a torque comprising the counteractive torque component ΔM (which is however directed in an opposite direction compared to the torque that is applied by the second pitch drive PD2) plus the counter torque component MB for compensating the torque of the blade 10.

As a consequence, the rotor blade 10 is fixed at its optimal position e.g. at αP = 0 and the blade 10 has no play because there is no backlash neither in the drive train of the first pitch drive PD1 nor in the drive train of the second pitch drive PD2.

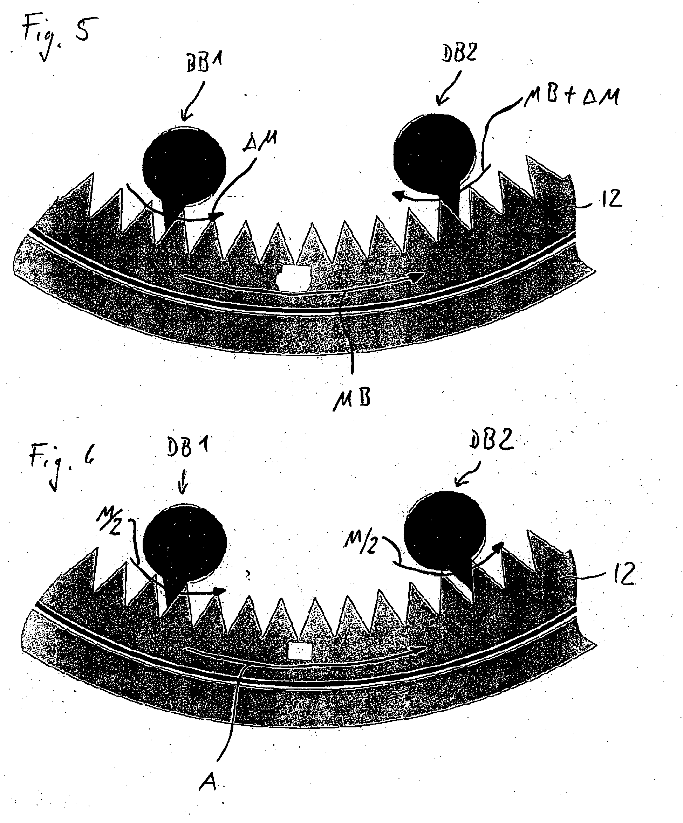

While according to FIG. 4, the first pitch drive PD1 has to take the blade torque indicated by the direction of rotation MB, according to FIG. 5 the second pitch drive PD2 has taken over this task. The drive bevels DB1 and DB2 of the first and second pitch drive PD1, PD2 apply a torque that is changed in prefix in comparison to the situation in FIG. 4. Exemplarily, the situation in FIG. 4 may be referred to as a first state while the situation in FIG. 5 may be referred to as a second state.

In FIG. 5, the first pitch drive DB1 applies a torque for applying the pretension or counteractive torque component ΔM into the mechanic drive chain, the second pitch drive DB2 applies a torque compensating the blade torque (indicated by MB) plus the pretension (indicated by ΔM).

When switching between the first state shown in FIG. 4 and the second state shown in FIG. 5, not only the thermal load is distributed between the first and second pitch drive PD1, PD2 but also a short time span where no torque is applied neither by the first pitch drive PD1 nor by the second pitch drive PD2 is present.

For an emergency shutdown of the wind energy plant 2, the pitch of the rotor blades 10 has to be set to an angle of approximately 90 degrees in order to decelerate the rotor 8. This position of the rotor blades 10 is also referred to as a feathering position. The pitch drive operation during this emergency shutdown is illustrated in FIG. 6. For such an emergency shutdown, a high pitching angle has to be realized within a short time. For this purpose, the first and second pitch drives PD1, PD2 are set to apply a high torque that is directed in the same direction and result in a uniform movement of the two pitch drives. If the necessary torque is M, both pitch drives applying half of the necessary torque each, i.e. each pitch drive applies M/2 to the annular gear 12. In FIG. 6, the applied torques are indicated by respective directions of rotation M/2 of the drive bevel DB1 of the first pitch drive PD1 and the drive bevel DB2 of the second pitch drive PD2. The applied torque results in an acceleration A of the annular gear 12 and the rotor blade 10, respectively.

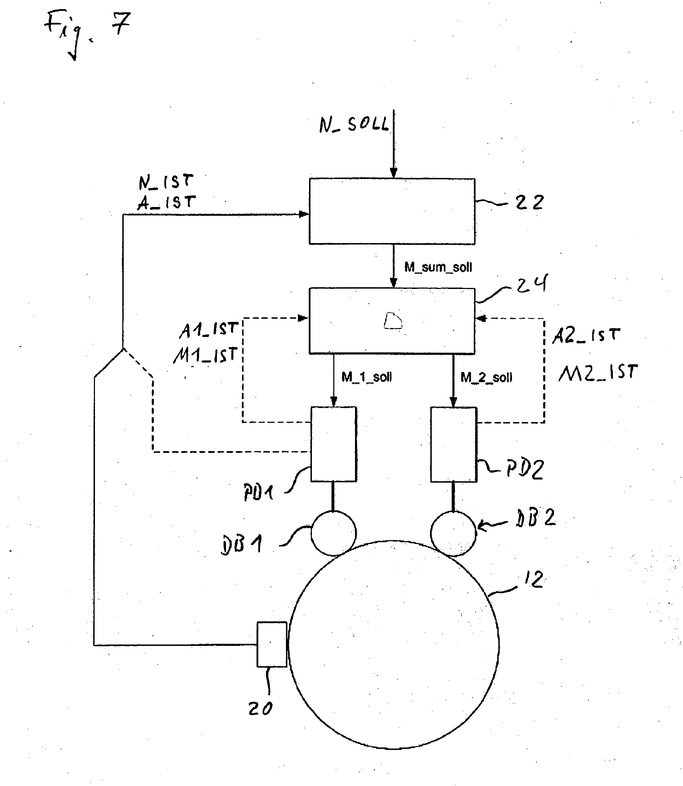

FIG. 7 schematically illustrates the control of the first and second pitch drive PD1 and PD2. The pitch drives power the respective drive bevels DB1, DB2 that engage the annular gear 12 of the rotor blade 10. Rotation of the rotor blade 10 is detected by a suitable detector 20. The measurement value N_IST is coupled to a pitch system control unit 22. A given value N_SOLL of the position or speed of the rotor blade 10 is further coupled to the pitch drive system control unit 22. A resulting value of the sum torque M_SUM_SOLL that has to be applied to the rotor blade 10, is coupled to the driver 24 that in turn calculates a respective given value of a drive torque for the pitch drive PD1 (M_1_SOLL) and a desired value M_2_SOLL for the second pitch drive PD2.

The calculation of M_1_SOLL and M_2_SOLL includes a measured blade acceleration A_IST or an estimated value thereof. Alternatively, the motor accelerations A1_IST and A2_IST may be applied.

A closed loop control for the actual torque is established for the first pitch drive PD1 and the second pitch drive PD2 by feedback of the values M_1_IST and M_2_IST. Accordingly, a closed loop control for the setting of the pitch angle αP and/or the pitch speed of the rotor blade 10 is established by compensation of the values N_IST to the desired value N_SOLL.

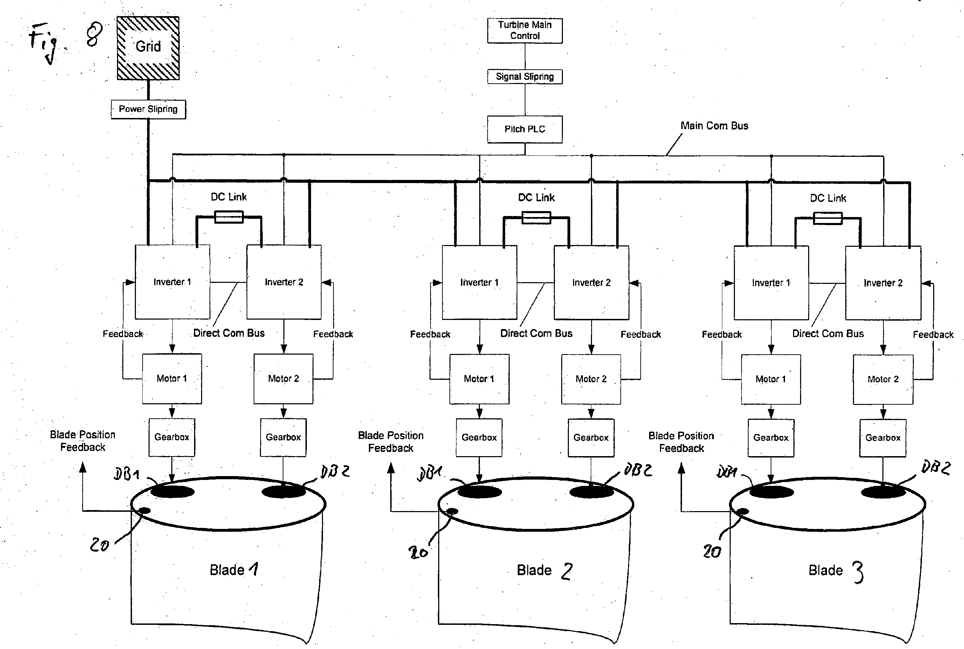

FIG. 8 is a schematic overview for a wind energy plant 2 having three blades namely BLADE 1, BLADE 2 and BLADE 3. Each blade is driven by a first and second pitch drive named MOTOR 1 and MOTOR 2. Each of the pitch drives is mounted to a suitable gearbox (named as such) e.g. an epicyclic gear, wherein each gearbox drives a drive bevel DB1, DB2. A suitable sensor 20 is applied to each of the blades to sense a position and/or an acceleration of the respective rotor blade. A measured value for the position of a rotor blade is coupled to the pitch control unit (not shown) as it is indicated by the arrow named BLADE POSITION FEEDBACK. For a synchronized antagonistic control of the pitch drives and the torque that is applied by the pitch drives to the respective blades, a direct link between the inverter INVERTER 1 and INVERTER 2 driving the pitch drives is advantageous. An inverter is an electrical power device that converts direct current (DC) to alternating current (AC). The converted AC can be at any required voltage and frequency with the use of appropriate transformers, switching, and control circuits. The inverter is used for driving the pitch drive. In order to implement a synchronization between the pitch drives comprising the electric motors MOTOR 1 and MOTOR 2, a fast interaction is provided by a direct broadband communication link, indicated by DIRECT COM BUS between the respective inverters INVERTER 1 and INVERTER 2 for the electric motors MOTOR 1 and MOTOR 2. Further, a DC link DC LINK is provided between the inverters. Coupling of the inverters of two counteracting pitch drives to the same DC link is advantageous because the energy created by the drive acting in the generator mode can directly be used for the counteracting drive operating in motor mode. In case of cyclic pitch control, a coupling of all inverters to the same DC link is also advantageous in order to share the acceleration or deceleration energy between the respective pitch drives. Each inverter is further coupled via a main Com Bus (named as such) to a pitch control unit PITCH PLC and further to the turbine main control (also named as such).

In case, one of the two pitch drives PD1, PD2 that are driving the same rotor blade 10 fails, the pitch operation may be continued. This may be done if a reduction of the pitch performance is acceptable, or if each pitch drive was sized for that case. The pitch drive PD1, PD2 may then be configured such that the antagonistic control is not enabled anymore. For a limited period of time, e.g. until the next maintenance interval, operation of the wind energy plant 2 without antagonistic control of the pitch drives PD1, PD2 may be provided. Each pitch drive may be designed such that in case of a failure of one of the two pitch drives, the antagonistic counterpart is still able to provide the required torque in order to push out the blades 10 from the feathering position to a stall position. Operation of the wind energy plant may be continued until the next maintenance interval. In this mode of operation, also a reduced maximum speed for a pitch movement, e.g.: 3°/sec instead of 5°/sec for a final emergency shut down may be acceptable.

In another embodiment of the invention (not shown), a first pitch drive PD1 is dimensioned bigger than a second pitch drive PD2, which means that, a maximum torque of the first pitch PD1 drive is higher than a maximum torque of the second drive PD2. The first pitch drive PD1 may be used for pitch operations into a direction of the stall position of the rotor blades 10 while the second pitch drive PD2 is used for pitch operations into a direction of the feathering position. However, the antagonistic way of operating the two pitch drives PD1, PD2, in order to eliminate backlash, may be maintained.

In an alternative embodiment (also not shown), three pitch drives are installed. In an analog way to the previous embodiment, two of the drives are used for changing the pitch angle αP in a direction to stall and the third pitch drive is used for pitch movement in a direction to the feathering position. The third drive may be controlled antagonistically to the first and second pitch drive, so as to provide a backlash free control of the pitch movement. Advantageously, the three pitch drives are identical. This allows making use of volume effects and facilitates logistics and service.

Advantageously, the two previous embodiments provide more available torque for a pitch movement that is directed to the stall position than for pitch movement in the opposite direction, i.e. to the feathering position. This has a positive impact on the dimensioning of the pitch drives, with respect to thermal load capacity as well as with respect to torque and power. Moreover, according to a further embodiment, depending on the layout of the pitch drives, a full redundancy for the first and second pitch drive PD1 and PD2 may be achieved, e.g. by using more than three pitch drives.

Although the invention has been described hereinabove with reference to a specific embodiments, it is not limited to these embodiments and no doubt further alternatives will occur to the skilled person that lie within the scope of the invention as claimed.

## Claims

1. A method for controlling a pitch angle (αP) of a rotor blade (10) of a wind energy plant (2) comprising a rotor having a rotor hub (8), wherein at least one rotor blade (10) is mounted to the rotor hub (8) and is further rotatable around a pitch axis (PA) by a pitch drive system having a first and a second antagonistic pitch drive (PD1, PD2), the method comprising the step of controlling the first and second pitch drive (PD1, PD2) so as to apply a first and a second counteractive torque (M1, M2) to the rotor blade (10), **characterized in that** the first pitch drive (PD1) is configured to provide a first maximum torque and the second pitch drive (PD2) is configured to provide a second maximum torque, wherein the maximum torque of the first pitch drive (PD1) is greater than the maximum torque of the second drive (PD2).

2. The method according to claim 1, wherein a first and a second counteractive torque (M1, M2) is applied to the rotor blade (10) so as to hold the rotor blade (10) at a predetermined pitch position.

3. The method according to claim 1, further comprising the step of: increasing a torque (M1) applied to the first pitch drive (PD1) so as to overcome a torque (M2) applied by the second pitch drive (PD2) and to vary a pitch angle (αP) of the rotor blade (10).

4. The method according to claim 3, wherein a torque applied by the second pitch drive (PD2) is maintained, lowered or cancelled.

5. The method according to one of the preceding claims, wherein a first torque (M1) that is applied by the first pitch drive (PD1) comprises a counter-torque component (MB) for compensating external forces acting on the rotor blade (10) and a counteractive component (ΔM), wherein the counteractive component (ΔM) of the first torque (M1) has the same nominal value as a torque (M2) that is applied by the second pitch drive (PD2).

6. The method according to claim 5, further comprising the step of: changing a prefix of the torque (M1, M2) that is applied by the first pitch drive (PD1) and the second pitch drive (PD2), wherein a second torque (M2) that is applied by the second pitch drive (PD2) comprises a counter-torque component (MB) for compensating external forces acting on the rotor blade (10) and a counteractive component (ΔM), and wherein the counteractive component (ΔM) of the second torque (M2) has the same nominal value as a torque (M1) that is applied by the first pitch drive (PD1).

7. The method according to claim 5 or 6, wherein the pitch drive system further comprises a third pitch drive and the method further comprises the step of: jointly controlling the first and third drive in that their resulting torque comprises a counter-torque component (MB) compensating external forces acting on the rotor blade (10), and a counteractive component (ΔM), wherein the counteractive component (ΔM) of the resulting torque has the same nominal value as a torque (M2) that is applied by the second pitch drive (PD2).

8. The method according to one of the preceding claims, further comprising the steps of:
a) changing the prefix of the torque (M2) applied by the second pitch drive (PD2) and
b) applying a torque to the rotor blade (10) by the first pitch drive (PD1) so as to vary the pitch angle (αP) of the rotor blade (10) towards its feathering position.

9. The method according to one of the preceding claims, further comprising the steps of:
a) detecting a failure in the first and second pitch drive (PD1, PD2), respectively; and
b) applying a torque to the rotor blade (10) so as to vary the pitch angle (αP) of the rotor blade (10) towards its feathering position by the second and first pitch drive (PD1, PD2), respectively.

10. The method according to one of the preceding claims, wherein each of the pitch drives (PD1, PD2) further comprises a brake and the method further comprises the step of: fixing at least one of the brakes of the first and second pitch drive (PD1, PD2) in a predetermined pitch position, and cancelling the torque (M1, M2) applied by the respective pitch drive (PD1, PD2).

11. The method for according to one of the preceding claims, wherein each of the pitch drives (PD1, PD2) further comprises a driven output shaft (18, 19) with a bevel (DB1, DB2) mounted thereon, the bevel (DB1, DB2) being adapted to engage an annular gear (12) or toothed ring that is fixed to the rotor blade (10), the method further comprising the step of: controlling the first and second pitch drive (PD1, PD2) in that the first and second counteractively controlled torques (M1, M2) are the torques seen by the corresponding driven output shafts (18, 19).

12. A pitch drive system for a wind energy plant (2) having a supporting structure (4) carrying a rotor having a rotor hub (8), wherein at least one rotor blade (10) is mounted to the rotor hub (8) and is further rotatable around a pitch axis (PA) by a first and a second antagonistic pitch drive (PD1, PD2), the pitch drive system further comprising: a control unit (22) that is configured to control the first pitch drive (PD1) and the second pitch drive (PD2) so as to apply a first and a second counteractive torque (M1, M2) to the rotor blade (10), **characterized in that** a maximum torque of the first pitch drive (PD1) is greater than a maximum torque of the second pitch drive (PD2).

13. The pitch drive system according to claim 12, wherein each of the pitch drives (PD1, PD2) further comprises a driven output shaft (18, 19) with a bevel (16) mounted thereon, the bevel (16) being adapted to engage an annular gear (12) or toothed ring that is fixed to the rotor blade (10), and wherein the first and the second pitch drive (PD1, PD2) are configured to apply a first and a second counteractive torque (M1, M2) to the corresponding driven output shaft (18, 19).

14. A pitch drive system according to claim 12 or 13, wherein each pitch drive (PD1, PD2) further comprises an electrical power device, the system being **characterized in that** the electrical power devices are electrically coupled with each other and each one of the electrical power devices is adapted to receive and transmit electrical power, respectively, from and to the other electrical power device.

15. A pitch drive system according to one of claims 12 to 14, wherein a direct communication link is established between the two pitch drives (PD1, PD2).

16. A wind energy plant (2) comprising a pitch drive system according to one of claims 12 to 15.

## Patentansprüche

1. Verfahren zur Steuerung eines Blatteinstellwinkels (αP) eines Rotorblatts (10) einer Windkraftanlage (2) mit einem Rotor, der eine Rotornabe (8) aufweist, wobei wenigstens ein Rotorblatt (10) an der Rotornabe (8) befestigt ist und ferner durch ein Blatteinstellantriebssystem, das einen ersten und einen zweiten gegenwirkenden Blatteinstellantrieb (PD1, PD2) aufweist, um eine Blatteinstellachse (PA) drehbar ist, wobei das Verfahren den Schritt umfasst, bei dem der erste und der zweite Blatteinstellantrieb (PD1, PD2) so gesteuert werden, dass ein erstes und ein zweites entgegenwirkendes Drehmoment (M1, M2) auf das Rotorblatt (10) ausgeübt werden, **dadurch gekennzeichnet, dass** der erste Blatteinstellantrieb (PD1) zur Bereitstellung eines ersten maximalen Drehmoments ausgebildet ist und der zweite Blatteinstellantrieb (PD2) zur Bereitstellung eines zweiten maximalen Drehmoments ausgebildet ist, wobei das maximale Drehmoment des ersten Blatteinstellantriebs (PD1) größer als das maximale Drehmoment des zweiten Antriebs (PD2) ist.

2. Verfahren nach Anspruch 1, bei dem ein erstes und ein zweites entgegenwirkendes Drehmoment (M1, M2) so auf das Rotorblatt (10) ausgeübt werden, dass das Rotorblatt (10) an einer vorbestimmten Blatteinstellposition gehalten wird.

3. Verfahren nach Anspruch 1, ferner mit dem Schritt, bei dem: ein auf den ersten Blatteinstellantrieb (PD1) ausgeübtes Drehmoment (M1) so erhöht wird, dass ein vom zweiten Blatteinstellantrieb (PD2) ausgeübtes Drehmoment (M2) überwunden und ein Blatteinstellwinkel (αP) des Rotorblatts (10) geändert wird.

4. Verfahren nach Anspruch 3, bei dem ein vom zweiten Blatteinstellantrieb (PD2) ausgeübtes Drehmoment beibehalten, verringert oder aufgehoben wird.

5. Verfahren nach einem der vorhergehenden Ansprüche, bei dem ein erstes Drehmoment (M1), das vom ersten Blatteinstellantrieb (PD1) ausgeübt wird, eine Gegendrehmomentkomponente (MB) zum Ausgleichen von auf das Rotorblatt (10) wirkenden äußeren Kräften und eine entgegenwirkende Komponente (ΔM) umfasst, wobei die entgegenwirkende Komponente (ΔM) des ersten Drehmoments (M1) den gleichen Nennwert wie ein Drehmoment (M2) hat, das vom zweiten Blatteinstellantrieb (PD2) ausgeübt wird.

6. Verfahren nach Anspruch 5, ferner mit dem Schritt, bei dem: ein Vorzeichen des Drehmoments (M1, M2), das vom ersten Blatteinstellantrieb (PD1) und vom zweiten Blatteinstellantrieb (PD2) ausgeübt wird, geändert wird, wobei ein zweites Drehmoment (M2), das vom zweiten Blatteinstellantrieb (PD2) ausgeübt wird, eine Gegendrehmomentkomponente (MB) zum Ausgleichen von auf das Rotorblatt (10) wirkenden äußeren Kräften und eine entgegenwirkende Komponente (AM) umfasst und wobei die entgegenwirkende Komponente (ΔM) des zweiten Drehmoments (M2) den gleichen Nennwert wie ein Drehmoment (M1) hat, das vom ersten Blatteinstellantrieb (PD1) ausgeübt wird.

7. Verfahren nach Anspruch 5 oder 6, bei dem das Blatteinstellantriebssystem ferner einen dritten Blatteinstellantrieb umfasst und das Verfahren ferner den Schritt umfasst, bei dem: der erste und der dritte Antrieb gemeinsam derart gesteuert werden, dass ihr resultierendes Drehmoment eine Gegendrehmomentkomponente (MB), die auf das Rotorblatt (10) wirkende äußere Kräfte ausgleicht, und eine entgegenwirkende Komponente (AM) umfasst, wobei die entgegenwirkende Komponente (AM) des resultierenden Drehmoments den gleichen Nennwert wie ein Drehmoment (M2) hat, das vom zweiten Blatteinstellantrieb (PD2) ausgeübt wird.

8. Verfahren nach einem der vorhergehenden Ansprüche, ferner mit den Schritten, bei denen:
a) das Vorzeichen des vom zweiten Blatteinstellantrieb (PD2) ausgeübten Drehmoments (M2) geändert wird und
b) vom ersten Blatteinstellantrieb (PD1) ein Drehmoment so auf das Rotorblatt (10) ausgeübt wird, dass der Blatteinstellwinkel (αP) des Rotorblatts (10) zu dessen Fahnenstellung hin geändert wird.

9. Verfahren nach einem der vorhergehenden Ansprüche, ferner mit den Schritten, bei denen:
a) eine Störung bei dem ersten bzw. dem zweiten Blatteinstellantrieb (PD1, PD2) erfasst wird und
b) ein Drehmoment so auf das Rotorblatt (10) ausgeübt wird, dass der Blatteinstellwinkel (αP) des Rotorblatts (10) zu dessen Fahnenstellung hin von dem zweiten bzw. dem ersten Blatteinstellantrieb (PD1, PD2) geändert wird.

10. Verfahren nach einem der vorhergehenden Ansprüche, bei dem jeder der Blatteinstellantriebe (PD1, PD2) ferner eine Bremse umfasst und das Verfahren ferner den Schritt umfasst, bei dem: wenigstens eine der Bremsen des ersten und des zweiten Blatteinstellantriebs (PD1, PD2) in einer vorbestimmten Blatteinstellposition festgestellt wird und das vom jeweiligen Blatteinstellantrieb (PD1, PD2) ausgeübte Drehmoment (M1, M2) aufgehoben wird.

11. Verfahren nach einem der vorhergehenden Ansprüche, bei dem jeder der Blatteinstellantriebe (PD1, PD2) ferner eine angetriebene Ausgangswelle (18, 19) mit einer daran angebrachten Schräge (DB1, DB2) umfasst, wobei die Schräge (DB1, DB2) zum Angreifen an einem Zahnring (12) oder Zahnkranz eingerichtet ist, der am Rotorblatt (10) befestigt ist, wobei das Verfahren ferner den Schritt umfasst, bei dem: der erste und der zweite Blatteinstellantrieb (PD1, PD2) derart gesteuert werden, dass das erste und das zweite entgegenwirkend gesteuerte Drehmoment (M1, M2) die auf die entsprechenden angetriebenen Ausgangswellen (18, 19) aufgebrachten Drehmomente sind.

12. Blatteinstellantriebssystem für eine Windkraftanlage (2), die eine Tragstruktur (4) aufweist, welche einen Rotor mit einer Rotornabe (8) trägt, wobei wenigstens ein Rotorblatt (10) an der Rotornabe (8) befestigt ist und ferner durch einen ersten und einen zweiten gegenwirkenden Blatteinstellantrieb (PD1, PD2) um eine Blatteinstellachse (PA) drehbar ist, wobei das Blatteinstellantriebssystem ferner eine Steuereinheit (22) umfasst, die so ausgebildet ist, dass sie den ersten Blatteinstellantrieb (PD1) und den zweiten Blatteinstellantrieb (PD2) so steuert, dass ein erstes und ein zweites entgegenwirkendes Drehmoment (M1, M2) auf das Rotorblatt (10) ausgeübt werden, **dadurch gekennzeichnet, dass** ein maximales Drehmoment des ersten Blatteinstellantriebs (PD1) größer als ein maximales Drehmoment des zweiten Blatteinstellantriebs (PD2) ist.

13. Blatteinstellantriebssystem nach Anspruch 12, bei dem jeder der Blatteinstellantriebe (PD1, PD2) ferner eine angetriebene Ausgangswelle (18, 19) mit einer daran angebrachten Schräge (16) umfasst, wobei die Schräge (16) zum Angreifen an einem Zahnring (12) oder Zahnkranz eingerichtet ist, der am Rotorblatt (10) befestigt ist, und wobei der erste und der zweite Blatteinstellantrieb (PD1, PD2) so ausgebildet sind, dass sie ein erstes und ein zweites entgegenwirkendes Drehmoment (M1, M2) auf die entsprechende angetriebene Ausgangswelle (18, 19) ausüben.

14. Blatteinstellantriebssystem nach Anspruch 12 oder 13, bei dem jeder Blatteinstellantrieb (PD1, PD2) ferner eine elektrische Leistungsvorrichtung umfasst, wobei das System **dadurch gekennzeichnet ist, dass** die elektrischen Leistungsvorrichtungen elektrisch miteinander gekoppelt sind und jede der elektrischen Leistungsvorrichtungen dazu eingerichtet ist, elektrische Leistung von der anderen elektrischen Leistungsvorrichtung zu empfangen bzw. an diese zu übertragen.

15. Blatteinstellantriebssystem nach einem der Ansprüche 12 bis 14, bei dem zwischen den beiden Blatteinstellantrieben (PD1, PD2) eine direkte Kommunikationsverbindung hergestellt ist.

16. Windkraftanlage (2) mit einem Blatteinstellantriebssystem nach einem der Ansprüche 12 bis 15.

## Revendications

1. Procédé de contrôle d'un angle de pas (αP) d'une pale de rotor (10) d'une éolienne (2) qui comprend un rotor présentant un moyeu de rotor (8), au moins une pale de rotor (10) étant montée sur le moyeu de rotor (8) et étant en outre apte à tourner autour d'un axe de pas (PA) au moyen d'un système de commande de pas qui présente une première et une deuxième commande de pas antagonistes (PD1, PD2), le procédé comprenant l'étape de contrôle de la première et de la deuxième commande de pas (PD1, PD2) de manière à appliquer un premier couple et un deuxième couple à action contraire (M1, M2) à la pale de rotor (10), **caractérisé en ce que** la première commande de pas (PD1) est réalisée de manière à fournir un premier couple maximum et **en ce que** la deuxième commande de pas (PD2) est réalisée de manière à fournir un deuxième couple maximum, le couple maximum de la première commande de pas (PD1) étant supérieur au couple maximum de la deuxième commande (PD2).

2. Procédé selon la revendication 1, un premier et un deuxième couple à action contraire (M1, M2) étant appliqués à la pale de rotor (10) de manière à retenir la pale de rotor (10) dans une position de pas prédéterminée.

3. Procédé selon la revendication 1, comprenant en outre l'étape dans laquelle un couple (M1) appliqué à la première commande de pas (PD1) est augmenté de manière à surmonter un couple (M2) appliqué par la deuxième commande de pas (PD2) et à changer un angle de pas (αP) de la pale de rotor (10).

4. Procédé selon la revendication 3, un couple appliqué par la deuxième commande de pas (PD2) étant maintenu, réduit ou éliminé.

5. Procédé selon l'une des revendications précédentes, un premier couple (M1) qui est appliqué par la première commande de pas (PD1) comprenant une composante (MB) de contre-couple pour compenser des forces externes agissant sur la pale de rotor (10) et une composante à action contraire (ΔM), la composante à action contraire (ΔM) du premier couple (M1) ayant la même valeur nominale qu'un couple (M2) appliqué par la deuxième commande de pas (PD2).

6. Procédé selon la revendication 5, comportant en outre l'étape dans laquelle un préfixe du couple (M1, M2) qui est appliqué par la première commande de pas (PD1) et par la deuxième commande de pas (PD2) est changé, un deuxième couple (M2) qui est appliqué par la deuxième commande de pas (PD2) comprenant une composante (MB) de contre-couple pour compenser des forces externes agissant sur la pale de rotor (10) et une composante à action contraire (ΔM), et la composante à action contraire (ΔM) du deuxième couple (M2) ayant la même valeur nominale qu'un couple (M1) appliqué par la première commande de pas (PD1).

7. Procédé selon la revendication 5 ou 6, le système de commande de pas présentant en outre une troisième commande de pas, et le procédé comprenant en outre l'étape dans laquelle la première et le troisième commande sont commandées ensemble de sorte que leur couple résultant comporte une composante de contre-couple (MB) qui compense les forces externes agissant sur la pale de rotor (10) et une composante à action contraire (ΔM), la composante à action contraire (ΔM) du couple résultant ayant la même valeur nominale qu'un couple (M2) appliqué par la deuxième commande de pas (PD2).

8. Procédé selon l'une des revendications précédentes, comportant en outres les étapes suivantes :
a) changement du préfixe du couple (M2) appliqué par la deuxième commande de pas (PD2), et
b) application d'un couple à la pale de rotor (10) par la première commande de pas (PD1) de manière à modifier l'angle de pas (αP) de la pale de rotor (10) vers sa position de mise en drapeau.

9. Procédé selon l'une des revendications précédentes, comportant en outres les étapes suivantes :
a) détection d'une défaillance dans la première et la deuxième commande de pas (PD1, PD2), respectivement, et
b) application d'un couple à la pale de rotor (10) de manière à modifier l'angle de pas (αP) de la pale de rotor (10) vers sa position de mise en drapeau au moyen de la deuxième et de la première commande de pas (PD1, PD2), respectivement.

10. Procédé selon l'une des revendications précédentes, chacune des commandes de pas (PD1, PD2) comportant en outre un frein, et le procédé comprenant en outre l'étape dans laquelle au moins l'un des freins de la première et de la deuxième commande de pas (PD1, PD2) est fixé dans une position de pas prédéterminée et le couple (M1, M2) appliqué par la commande de pas (PD1, PD2) correspondante est éliminé.

11. Procédé selon l'une des revendications précédentes, chacune des commandes de pas (PD1, PD2) comportant en outre un arbre de sortie mené (18, 19) sur lequel un chanfrein (DB1, DB2) est agencé, le chanfrein (DB1, DB2) étant apte à s'engager sur une roue d'engrenage annulaire (12) ou un anneau denté fixé sur la pale de rotor (10), le procédé comprenant en outre l'étape dans laquelle la première et la deuxième commande de pas (PD1, PD2) sont contrôlées de manière à ce que le premier et le deuxième couple (M1, M2) commandés en action contraire sont les couples perçus par les arbres de sortie menés (18, 19) correspondants.

12. Système de commande de pas pour une éolienne (2) comportant une structure de support (4) portant un rotor qui présente un moyeu de rotor (8), au moins une pale de rotor (10) étant montée sur le moyeu de rotor (8) et étant en outre apte à tourner autour d'un axe de pas (PA) au moyen d'une première et d'une deuxième commande de pas antagonistes (PD1, PD2), le système de commande de pas comportant en outre une unité de contrôle (22) qui est réalisée de manière à contrôler la première commande de pas (PD1) et la deuxième commande de pas (PD2) de sorte à appliquer un premier et un deuxième couple (M1, M2) à action contraire à la pale de rotor (10), **caractérisé en ce qu'**un couple maximum de la première commande de pas (PD1) est supérieur à un couple maximum de la deuxième commande (PD2).

13. Système de commande de pas selon la revendication 12, chacune des commandes de pas (PD1, PD2) comportant en outre un arbre de sortie mené (18, 19) sur lequel un chanfrein (16) est agencé, le chanfrein (16) étant apte à s'engager sur une roue d'engrenage annulaire (12) ou un anneau denté fixé sur la pale de rotor (10), et la première et la deuxième commande de pas (PD1, PD2) étant réalisées de manière à appliquer un premier et un deuxième couple (M1, M2) à action contraire à l'arbre de sortie mené (18, 19) correspondant.

14. Système de commande de pas selon la revendication 12 ou 13, chaque commande de pas (PD1, PD2) comportant en outre un dispositif de puissance électrique, le système étant **caractérisé en ce que** les dispositifs de puissance électrique sont électriquement couplés l'un à l'autre et **en ce que** chacun des dispositifs de puissance électrique est apte à recevoir et à transmettre de la puissance électrique, respectivement, depuis et vers l'autre dispositif de puissance électrique.

15. Système de commande de pas selon l'une des revendications 12 à 14, une liaison de communication directe étant établie entre les deux commandes de pas (PD1, PD2).

16. Eolienne (2), comportant un système de commande de pas selon s'une des revendications 12 à 15.
